(19) Europäisches Patentamt
European Patent Office
Office européen des brevets

(11) EP 4 742 325 A1

(12) EUROPEAN PATENT APPLICATION
published in accordance with Art. 153(4) EPC

(43) Date of publication:
13.05.2026 Bulletin 2026/20

(21) Application number: 24946936.2

(22) Date of filing: 14.11.2024

(51) International Patent Classification (IPC):
H01M 4/525 (2010.01)    H01M 10/052 (2010.01)
H01M 4/131 (2010.01)    H01M 4/505 (2010.01)
C01G 53/00 (2025.01)

(52) Cooperative Patent Classification (CPC):
Y02E 60/10

(86) International application number:
PCT/CN2024/132096

(87) International publication number:
WO 2026/011635 (15.01.2026 Gazette 2026/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.07.2024 CN 202410910299

(71) Applicants:
• Guangdong Brunp Recycling Technology Co.,
Ltd.
Foshan, Guangdong 528137 (CN)
• Hunan Brunp Recycling Technology Co., Ltd.
Changsha, Hunan 410600 (CN)

(72) Inventors:
• YU, Haijun
Foshan, Guangdong 528137 (CN)
• LI, Changdong
Foshan, Guangdong 528137 (CN)
• WANG, Tao
Foshan, Guangdong 528137 (CN)
• HUANG, Weiyan
Foshan, Guangdong 528137 (CN)

(74) Representative: Westphal, Mussgnug & Partner,
Patentanwälte mbB
Werinherstraße 79
81541 München (DE)

(54) LITHIUM-ION POSITIVE ELECTRODE MATERIAL, PREPARATION METHOD THEREFOR AND APPLICATION THEREOF

(57) Disclosed are a cathode material for lithium ion batteries, a preparation method therefor, and use thereof, which relate to the technical field of lithium ion batteries. The ability of a polycrystalline cathode material to resist the generation of internal cracks during cycle is evaluated by anti-cracking strength. By providing a cathode material, which has an anti-cracking strength that satisfies a specific range, and a high-strength crystals and grain boundaries, so that the structural stability of the material can be improved, and the diffusion of the internal cracks to the interface can be effectively inhibited, thereby improving the cycle stability and lifetime of the material.

Figure 1

EP 4 742 325 A1

**Description**

**CROSS-REFERENCE TO RELATED APPLICATION**

The present disclosure claims priority of Chinese patent application No. 2024109102998 filed with the Chinese Patent Office on July 9, 2024, entitled "CATHODE MATERIAL FOR LITHIUM ION BATTERIES, PREPARATION METHOD THEREFOR, AND USE THEREOF," the entire contents of which are incorporated herein by reference.

**TECHNICAL FIELD**

The present disclosure relates to the technical field of lithium batteries, and in particular, to a cathode material for lithium batteries, a preparation method therefor, and use thereof.

**BACKGROUND**

The rapid development of lithium-ion batteries has driven the rapid development of ternary cathode materials, which have the advantages of high specific capacity, moderate price, low toxicity and relatively abundant resources. However, there are also many problems with a ternary material, especially a nickel-rich ternary material, which has poor cycle performance of batteries, multi-level phase transitions during charging and discharging, and large volume changes during charging and discharging, which can easily cause residual stress, and leading to problems of mechanical fracture, etc.

In order to increase the tap density of the ternary material while suppressing the generation of surface side reactions, the ternary material is prepared into secondary particles formed by the dense stacking of primary particles, which greatly reduces the contact between the primary particles and the electrolytic solution, thereby reducing the generation of interfacial side reactions. However, the secondary particles still bring new problems: First, the secondary particles require a very dense arrangement of primary particles, especially a dense interface, which can effectively block the contact between the internal primary particles and the electrolytic solution. Such dense secondary particles greatly increase the difficulty of synthesis. In addition, the expansion and contraction of the volume of the secondary particles during the charging and discharging process will cause an increase in internal stress, and the long-term cycle will cause these stresses to gradually accumulate, gradually leading to microcracks inside and on the surface of the secondary particles, and eventually causing the entire secondary particles to rupture.

The mechanical fracture of the ternary cathode materials undergoes the following development process: during the charging process, as the deintercalation of $Li^+$ occurs, the interlayer spacing of the ternary material gradually increases, which is mainly due to the increase in electrostatic repulsion between the layers after the deintercalation of $Li^+$. When a highly delithiated state is reached, the interlayer spacing shrinks. The reason for the shrinkage may be the structural slip caused by the deintercalation of a large amount of $Li^+$ from the interlayer; it may further because O participates in the redox reaction, resulting in a decrease in the interlayer electrostatic repulsion and a decrease in the interlayer spacing. During the discharging process, the change in interlayer spacing is completely opposite to that during the charging process. During one charging and discharging process, the layered material undergoes four expansion and shrinkage cycles, which inevitably generates residual stress during the volume change. The accumulation of residual stress leads to microcracks at the grain boundaries between the particles, thereby increasing the contact with the electrolytic solution, aggravating interfacial side reactions, which further exacerbates the expansion of microcracks, ultimately leading to particle rupture, resulting in a decrease or even failure in battery capacity. It can be seen that the final rupture of the polycrystalline ternary cathode material particles is related to the unit cell deformation and failure of grain boundaries of the ternary cathode material. The unit cell and grain boundary jointly affect whether the cathode material is prone to cracking during use. It is of great significance to provide a cathode material with both high-strength crystals and grain boundaries.

Therefore, there is an urgent need to provide cathode materials with both high-strength crystals and grain boundaries to improve the ability of a material to resist the generation of internal cracks during cycle, thereby improving the cycle stability and lifetime of the material.

In view of this, the present disclosure is proposed.

**SUMMARY**

The objective of the present disclosure is to provide a cathode material for lithium ion batteries, a preparation method therefor, and use thereof, which aims to improve the ability of a material to resist the generation of internal cracks during cycle, thereby improving the cycle stability and lifetime of the material.

The present disclosure is implemented as follows.

In a first aspect, the present disclosure provides a cathode material for lithium ion batteries having an anti-cracking strength of 4 MPa to 15 MPa;

$$Anti-cracking\ strength = \frac{Average\ crushing\ strength}{rate\ of\ change\ of\ unit\ cell\ parameter} = \frac{\overline{St}/1000}{\Delta\left(\frac{c}{a}\right)_{max} \times \Delta\left(\frac{c}{a}\right)_{t}};$$

where,

wherein St represents a crushing strength obtained through an indentation test in MPa; $\overline{St}$ represents an average crushing strength in MPa, $\overline{St} = \left(\sum_{i=1}^{n} St_i\right)/n$, n is a sample size, and n≥10;

$\Delta\left(\frac{c}{a}\right)_{max}$ represents a maximum variation value of shear strain during a first charging process;

$$\Delta\left(\frac{c}{a}\right)_{max} = \left(\frac{c}{a}\right)_{max} - \left(\frac{c}{a}\right)_{min};$$

$\Delta\left(\frac{c}{a}\right)_{t}$ represents a variation value of shear strain after 10 charge-discharge cycles, t=10;

where $\Delta\left(\frac{c}{a}\right)_{t} = \left(\frac{c}{a}\right)_{t} - \left(\frac{c}{a}\right)_{0}$, $\Delta\left(\frac{c}{a}\right)_{t}$ represents a shear strain measured at a static state after 10 charge-discharge cycles, and $\left(\frac{c}{a}\right)_{0}$ represents a shear strain measured at a static state before the first charge; and a and c each represent a unit cell parameter.

In an optional embodiment, the cathode material has an anti-cracking strength of 6 MPa to 15 MPa;

$$St=2.8\times P/(\pi d^2);$$

wherein P represents a maximum pressure value before a point of sudden pressure drop in an indentation test in mN;

d represents a particle diameter of the cathode material in $\mu$m;

$\Delta\left(\frac{c}{a}\right)_{max}$ ranges from 0.2 to 0.3, $\Delta\left(\frac{c}{a}\right)_{t}$ ranges from 0.01 to 0.20, and St ranges from 90 MPa to 140 MPa; and

c and a are each obtained by XRD testing via an X-ray diffractometer.

In an optional embodiment, the cathode material has a general formula of $Li_xNi_aCo_bM_cM'_{1-a-b-c}A_yO_{2-y}$;

wherein M is at least one selected from the group consisting of Al and Mn;

M' is at least one selected from the group consisting of Zr, Sr, Mo, Ba, W, B, Ti, Mg, Li, Si, Ca, Cu, La, Ce, Bi, In, Al, Nb and Y;

A is at least one selected from the group consisting of P and F; and

where 0.95≤x<1.1, a>0, b>0, c>0, 0.95≤(a+b+c)≤1 and 0≤y≤0.01.

In a second aspect, the present disclosure further provides a method for preparing the cathode material for the lithium ion batteries, comprising: preparing a cathode material that satisfies anti-cracking strength requirements.
In an optional embodiment, the method comprises:

preparing a precursor inner core with a nickel salt, a cobalt salt and an M salt by a coprecipitation reaction;

mixing the precursor inner core with a reinforcement solution to allow a reaction, and then calcining to obtain a reinforcement precursor inner core; wherein raw materials in the reinforcement solution are calcined to obtain a reinforcement aid; and the reinforcement aid is at least one selected from the group consisting of $LiAlO_2$, $LiMn_2O_4$ and $LiCoPO_4$;

performing a coprecipitation reaction using the nickel salt, the cobalt salt, the M salt and a first doping element compound, to continuously grow a shell on the reinforcement precursor inner core, so as to obtain a ternary precursor with a core-shell structure; wherein, the first doping element compound has at least one doping element selected from the group consisting of Ti, Al, Zr and Mg; and

mixing the ternary precursor with a lithium source and calcining a resulting mixture; or, mixing the ternary precursor, a second doping element compound and a lithium source and calcining a resulting mixture; wherein the second doping element compound has at least one doping element selected from the group consisting of Zr, Sr, Mo, Ba, W, B, Ti, Mg, Li, F, Si, Ca, Cu, La, P, Ce, Bi, In, Nb and Y.

In an optional embodiment, the precursor inner core has primary particles radially arranged and has a porosity of 4% to 12%.

In an optional embodiment, a preparation process of the precursor inner core includes: preparing a base solution in a reactor, and introducing a first mixed metal salt solution, a first precipitant solution, and a first complexing agent solution into the base solution for a coprecipitation reaction. The preparation process of the precursor inner core satisfies at least one of features $A_1$ to $E_1$:

feature $A_1$: a reaction temperature of the coprecipitation reaction is controlled at 75°C to 95°C;

feature $B_1$: a pH value of the coprecipitation reaction is controlled at 10.5 to 11.5;

feature $C_1$: when a particle size D50 grows to 2 $\mu$m to 17 $\mu$m, the introductions are stopped;

feature $D_1$: the coprecipitation reaction is performed under a protection of an inert atmosphere, and a rotation speed during the reaction is 400 rpm to 800 rpm; and

feature $E_1$: after the coprecipitation reaction is completed, aging is performed, followed by carrying out alkali solution washing, water washing and drying successively.

In an optional embodiment, the preparation process of the precursor inner core satisfies at least one of features $F_1$ to $K_1$:

feature $F_1$: the first complexing agent solution is an ammonia solution with a mass fraction of 18% to 22%, wherein during the coprecipitation reaction, an ammonia concentration in the reactor is controlled at 3 g/L to 7 g/L;

feature $G_1$: the first mixed metal salt solution has a total molar concentration of metal ions of 1.8M to 2.2M, and a flow rate of 400 L/h to 500 L/h;

feature $H_1$: the first mixed metal salt solution has a molar ratio of nickel, cobalt and M of 35-98: 1-35: 1-35;

feature $I_1$: the first mixed metal salt solution has a salt of any one of nitrate, chloride salt and sulfate;

feature $J_1$: the first precipitant solution is a sodium hydroxide solution with a mass fraction of 30% to 34%; and

feature $K_1$: the base solution has an ammonia concentration of 4.5 g/L to 5.5 g/L, and a pH value of 11.8 to 12.2.

In an optional embodiment, a preparation process of the reinforcement precursor inner core includes: subjecting the precursor inner core and the reinforcement solution to mixing and ultrasonicating, reacting a resulting mixture for 10 min to 60 min at a temperature of 100°C to 150°C and a pressure of 10 MPa to 20 MPa, followed by performing a solid-liquid separation to obtain a solid material, and calcining the solid material.

In an optional embodiment, the preparation process of the reinforcement precursor inner core satisfies at least

one of features $A_2$ to $F_2$:

feature $A_2$: the reinforcement solution further contains a thickener, and a viscosity of the reinforcement solution is adjusted to 5 mPa·s to 8 mPa·s by regulating a dosage of the thickener;

feature $B_2$: when feature $A_2$ is satisfied, the thickener is at least one selected from the group consisting of carbomer, xanthan gum, gelatin and starch;

feature $C_2$: a dosage of the reinforcement solution in 1 g the precursor inner core is 90 mL to 110 mL;

feature $D_2$: the ultrasonicating is performed for 10 min to 60 min;

feature $E_2$: the calcining is performed at 600°C to 700°C for 3 h to 8 h; and

feature $F_2$: the solid material is first dried at a condition of 80°C to 120°C for 5 h to 10 h and then calcined.

In an optional embodiment, a preparation process of the ternary precursor having a core-shell structure includes: adding the reinforcement precursor inner core to a base solution in a reactor, and introducing a second mixed metal salt solution, a second precipitant solution and a second complexing agent solution to the reactor for a coprecipitation reaction; wherein, the second mixed metal salt solution contains a nickel salt, a cobalt salt, an M salt and the first doping element compound, and by regulating an addition rate of the second mixed metal salt solution, an addition rate of the nickel, cobalt and M elements during the coprecipitation reaction process is controlled to be lower than an addition rate when preparing the precursor inner core.

In an optional embodiment, the preparation process of the ternary precursor having a core-shell structure satisfies at least one of features $A_3$ to $I_3$:

feature $A_3$: the second mixed metal salt solution has a total molar concentration of nickel, cobalt, and M elements of 1.8M to 2.2M, a flow rate of 100 L/h to 200 L/h, and a pH value is regulated to be 2 to 5;

feature $B_3$: based on a total molar amount of the nickel, cobalt and M elements, a ratio of a total molar amount of the metal in the reinforcement precursor inner core to a total molar amount of the metal in the second mixed metal salt solution is 4-12: 1;

feature $C_3$: the second mixed metal salt solution has a molar ratio of nickel, cobalt and M elements of 30-60: 20-35: 20-35;

feature $D_3$: the coprecipitation reaction is performed at a reaction temperature of 75°C to 95°C, and a reaction pH value of 10.8 to 11.2;

feature $E_3$: the second complexing agent solution is an ammonia solution with a mass fraction of 18% to 22%, wherein during the coprecipitation reaction, an ammonia concentration in the reactor is controlled at 3 g/L to 7 g/L;

feature $F_3$: the first doping element compound is at least one selected from the group consisting of titanium disulfate, sodium metaaluminate, zirconium nitrate, zirconium acetate, zirconium sulfate, magnesium sulfate and magnesium nitrate;

feature $G_3$: the base solution in the reactor is water, and the second precipitant solution is a sodium hydroxide solution with a mass fraction of 30% to 40%;

feature $H_3$: the coprecipitation reaction is performed under a protection of an inert atmosphere, and a rotation speed during the reaction is 300 rpm to 500 rpm; and

feature $I_3$: after introducing the second mixed metal salt solution, the reaction is continued for 0.5 h to 2.0 h, and then a solid-liquid separation is performed, and an obtained solid material is washed with water and dried.

In an optional embodiment, the process of mixing the ternary precursor, the second doping element compound and the lithium source and calcining a resulting mixture satisfies at least one of features $A_4$ to $F_4$:

feature $A_4$: a molar ratio of a total amount of nickel, cobalt, and M elements in the ternary precursor to a lithium content in the lithium source is 1: 1.05-1.1;

feature $B_4$: the lithium source is lithium hydroxide;

feature $C_4$: the second doping element compound is at least one selected from the group consisting of oxides, fluorides, carbonates, hydroxides, nitrides, borides, and nitrates;

feature $D_4$: the calcining comprises a first calcination performed at 400°C to 500°C for 2 h to 6 h, and a second calcination performed at 750°C to 850°C for 10 h to 15 h;

feature $E_4$: the calcining is performed in an oxygen-containing atmosphere; and

feature $F_4$: the ternary precursor, the second doping element compound, and the lithium source are first mixed and ground, and then calcined.

In a third aspect, the present disclosure further provides a cathode sheet, including the cathode material in any of the above embodiments or the cathode material prepared by the method in any of the above embodiments.

In a fourth aspect, the present disclosure further provides a lithium ion battery including the cathode sheet in the above embodiments.

The present disclosure has the following beneficial effects: by constructing a calculation formula for anti-cracking strength, an ability of a polycrystalline cathode material to resist the generation of internal cracks during cycle is evaluated. An influence of the unit cells and grain boundaries is comprehensively considered to ensure that the anti-cracking strength satisfies a specific value range. The cathode material with an anti-cracking strength satisfying a specific value range has high-strength crystals and grain boundaries, which can improve the structural stability of the material and effectively inhibit the diffusion of the internal cracks to the interface, thereby improving the cycle stability and lifetime of the material.

## BRIEF DESCRIPTION OF THE DRAWINGS

In order to more clearly explain the technical solution of the embodiments of the present disclosure, a brief description will be given below to the accompanying drawings required to be used in the embodiments. It should be understood that the following accompanying drawings only illustrate certain embodiments of the present disclosure, and therefore should not be regarded as restrictions on the scope. For those ordinarily skilled in the art, other relevant drawings can also be obtained based on these accompanying drawings without creative efforts.

Figure 1 is an ion sectional view of the cathode material prepared in Example 1;

Figure 2 is an ion sectional view of the cathode material prepared in Comparative Example 1;

Figure 3 is a sectional view of the cathode material prepared in Example 1;

Figure 4 is a sectional view of the cathode material prepared in Comparative Example 2;

Figure 5 is an XRD spectrum of the precursor inner core and the precursor material in Example 1;

Figure 6 is a TEM image and an EDS image of the cathode material prepared in Example 1; wherein (a) represents the TEM image, and (b) represents the EDS image; and

Figure 7 is a TEM image and an EDS image of the cathode material prepared in Example 4; wherein (a) represents the TEM image, and (b) represents the EDS image.

## DETAILED DESCRIPTION

In order to more clearly illustrate the objects, technical solutions, and advantages of the embodiments of the present disclosure, a clear and complete description of the technical solutions in the embodiments of the present disclosure will be made below. The conventional conditions or conditions recommended by the manufacturers shall be followed unless specific conditions are specified in the embodiments. The reagents or instruments used of which the manufacturers are not indicated, are all commercially available conventional products.

An embodiment of the present disclosure provides a cathode material for lithium ion batteries, which is a secondary particle formed by the agglomeration of primary particles and belongs to a polycrystalline material. The cathode material has a general formula of $Li_xNi_aCo_bM_cM'_{1-a-b-c}A_yO_{2-y}$.

The descriptions of the parameters in the general formula are as follows.

M is at least one selected from the group consisting of Al and Mn, and M may be any one or two of the above.

M' is at least one selected from the group consisting of Zr, Sr, Mo, Ba, W, B, Ti, Mg, Li, Si, Ca, Cu, La, Ce, Bi, In, Al, Nb and Y, and M' may be any one or more of the above.

A is at least one selected from the group consisting of P and F, and may be any one or two of the above.

Subscripts x, y, a, b and c are expressed in mol, where $0.95 \leq x < 1.1$, and x may be specifically 0.95, 0.96, 0.97, 0.98, 0.99, 1.00, 1.03, 1.05, 1.08, and 1.10, etc.

Where a>0, b>0, c>0, and $0.95 \leq (a+b+c) \leq 1$, and a+b+c may be 0.95, 0.96, 0.97, 0.98, 0.99, 1.00, etc. If a+b+c=1, the M' element is not included.

Where $0 \leq y \leq 0.01$, and y may be 0.000, 0.003, 0.005, 0.008, and 0.010, etc. If y is 0, the cathode material contains no A element.

The inventors discovered that both crystal strength and grain boundary strength determine the ability of the cathode material to resist the generation of internal cracks during cycle, and their relationship may be expressed by the following formula:

$$Anti-cracking\ strength = \frac{Average\ crushing\ strength}{rate\ of\ change\ of\ unit\ cell\ parameter} = \frac{\overline{St}/1000}{\Delta\left(\frac{c}{a}\right)_{max} \times \Delta\left(\frac{c}{a}\right)_t}$$

wherein St represents a crushing strength obtained through indentation test in MPa; a pressure calculated from a maximum pressure value before a point of sudden pressure drop during the test is the crushing strength of the material, $St = 2.8 \times P/(\pi d^2)$, wherein P represents the maximum pressure value before the point of sudden pressure drop in mN; d represents the particle diameter of the cathode material for lithium ion batteries in $\mu m$;

$\overline{St}$ represents the average crushing strength, $\overline{St} = \left(\sum_{i=1}^{n} St_i\right)/n$, n is a sample size, and $n \geq 10$;

$\Delta\left(\frac{c}{a}\right)_{max}$ represents a maximum variation value of shear strain during a first charging process, reflecting a degree of immediate deformation of the material; that is:

$$\Delta\left(\frac{c}{a}\right)_{max} = \left(\frac{c}{a}\right)_{max} - \left(\frac{c}{a}\right)_{min};$$

$\Delta\left(\frac{c}{a}\right)_t$ represents a variation value of shear strain after 10 charge-discharge cycles (i.e., t=10), reflecting an irrecoverable strain accumulated during the cycle process of the material, $\Delta\left(\frac{c}{a}\right)_t = \left(\frac{c}{a}\right)_t - \left(\frac{c}{a}\right)_0$, $\Delta\left(\frac{c}{a}\right)_t$ represents a shear strain measured at a static state after 10 charge-discharge cycles, and $\left(\frac{c}{a}\right)_0$ represents a shear strain measured at a static state before the first charge; and

c represents a unit cell parameter; and a represents a unit cell parameter. c and a are obtained by XRD testing via X-ray diffractometer.

The anti-cracking strength of the cathode material provided in the embodiment of the present disclosure ranges from 4 MPa to 15 MPa, preferably 6 MPa to 15 MPa, such as it may be 4 MPa, 5 MPa, 6 MPa, 7 MPa, 8 MPa, 9 MPa, 10 MPa, 11 MPa, 12 MPa, 13 MPa, 14 MPa, and 15 MPa, etc., or it may also be any value of the adjacent values mentioned above.

$\Delta\left(\frac{c}{a}\right)_{max}$ ranges from 0.2 to 0.3, such as 0.20, 0.22, 0.25, 0.28, and 0.30;

$\Delta\left(\frac{c}{a}\right)_t$ ranges from 0.01 to 0.20, such as 0.01, 0.03, 0.05, 0.08, 0.10, 0.12, 0.15, 0.18, and 0.20;

St ranges from 90 MPa to 140 MPa, such as 90 MPa, 100 MPa, 110 MPa, 120 MPa, 130 MPa, and 140 MPa, etc.

It should be noted that the anti-cracking strength parameter indicators provided in the present disclosure may comprehensively evaluate various factors that cause the generation of internal cracks in the cathode material, including the crystal structure itself and the grain boundary strength. Wherein $\Delta\left(\frac{c}{a}\right)_{max}$ reflects an anti-deformation ability of the crystal during charging; and $\Delta\left(\frac{c}{a}\right)_t$ reflects that the permanent deformation occurs during the crystal cycle and that the crystal undergoes an irreversible phase change. The above two factors both reflect the influence of the crystal structure itself on the generation of internal cracks. Whereas, the crushing strength may reflect the strength of grain boundaries. The crack firstly occurring in a polycrystalline material is due to a dissociation of the grain boundary (a contact surface between primary particles) because the grain boundary has lower bonding strength than the interior of the crystal. It has been verified through experiments that the greater the anti-cracking strength, the smaller the rate of change of the specific surface area of material after the same number of charging and discharging cycles. The specific surface area may reflect the degree of microcracks occurring in the material. The more microcracks generated in the material indicates that the cycle stability of the material is worse. In summary, the greater the anti-cracking strength, the higher the cycle stability of the material.

Unit cell deformation is an inherent property of the material, which is usually improved by doping elements to improve the strength of the chemical bonds; for the problem of grain boundary failure, it is usually improved by means of controlling the grain shape of the primary particles and their morphology after agglomeration, and the doping elements, etc. The inventors also provide a preparation method of the cathode material, by combining the inner core and the shell with doping elements, the anti-cracking strength of the product may be made to satisfy the requirements. The specific preparation process is as follows.

The present disclosure provides a preparation method of the cathode material for lithium ion batteries, comprising the following steps.

S1. Preparation of precursor inner core

Preparing the precursor inner core with a nickel salt, a cobalt salt, and an M salt (i.e., a salt containing M element in the general formula) by a coprecipitation reaction, wherein the M salt may be a manganese salt or an aluminum salt.

In some embodiments, the precursor inner core has primary particles radially arranged and has a porosity of 4% to 12% (such as 4%, 5%, 6%, 7%, 8%, 9%, 10%, 11%, 12%, etc.). The radial arrangement of the primary particles and maintaining a certain porosity are conducive to the dissipation of stress, which is beneficial to inhibiting the formation of intercrystalline cracks during the cycle of the cathode material, and delaying the irreversible phase transition from the layered phase to the rock salt phase, thereby improving the structural stability of the ternary cathode material.

In some embodiments, a preparation process of the precursor inner core includes: preparing a base solution in a reactor, and introducing a first mixed metal salt solution, a first precipitant solution, and a first complexing agent solution into the base solution for a coprecipitation reaction under a protection of an inert atmosphere, with a reaction temperature of the coprecipitation reaction controlled at 75°C to 95°C, a reaction pH value controlled at 10.5 to 11.5, and a rotation speed controlled at 400 rpm to 800 rpm, stopping introducing when a particle size D50 grows to 2 μm to 17 μm. After the coprecipitation reaction is completed, aging is performed, followed by alkali washing, water washing, and drying successively, wherein the alkali washing is used to wash away the sodium and sulfur residues, and the water washing is used to remove the residual alkali solution on the surface, and drying is used to remove the moisture. Sieving may also be performed after drying to obtain a precursor inner core with a particle size satisfying the requirements.

Specifically, a reaction temperature of the coprecipitation reaction may be 75°C, 80°C, 85°C, 90°C, and 95°C, etc., a pH value may be 10.5, 10.8, 11.0, 11.2, and 11.5, etc., and a rotation speed may be 400 rpm, 500 rpm, 600 rpm, 700 rpm, and 800 rpm, etc. The particle size of the product is detected during the reaction, and the particle size D50 at the end of the reaction may be controlled at 2 μm, 5 μm, 8 μm, 10 μm, 12 μm, 15 μm, and 17 μm, etc. The inert atmosphere may be nitrogen, but is not limited thereto. Alkali washing may be performed using a hot dilute alkali solution to effectively remove the sodium and sulfur residues.

In some embodiments, the first complexing agent solution is an ammonia solution with a mass fraction of 18% to 22%, and an ammonia concentration in the reactor during the precipitation reaction is made to be 3 g/L to 7 g/L by regulating an addition rate of the first complexing agent solution; the first precipitant solution is a sodium hydroxide solution with a mass fraction of 30% to 34%, and a pH value of the system is controlled to satisfy the requirements by regulating an addition rate of the first precipitant solution. Specifically, the mass fraction of the ammonia solution may be 18%, 20%, and 22%, etc., and the ammonia concentration in the reactor during the precipitation reaction may be 3 g/L, 4 g/L, 5 g/L, 6 g/L, and 7 g/L, etc.; and the mass fraction of the sodium hydroxide solution may be 30%, 31%, 32%, 33%, and 34%, etc.

In some embodiments, a molar ratio of nickel, cobalt, and M in the first mixed metal salt solution is 35-98: 1-35:

1-35, a total molar concentration of metal ions of the first mixed metal salt solution is 1.8M to 2.2M, and a flow rate of the first mixed metal salt solution is 400 L/h to 500 L/h. By further regulating a composition, a concentration and an addition rate of the first mixed metal salt solution, a deposition rate may be controlled, so that the precursor inner core presents a porous morphology.

Specifically, in the first mixed metal salt solution, the molar ratio of nickel, cobalt and M element may be 35: 30: 35, 40: 30: 30, 50: 20: 30, 60: 20: 20, 70: 10: 20, 80: 10: 10, 90: 5: 5, 98: 1: 1, etc. The total molar concentration of metal ions of the first mixed metal salt solution represents the total concentration of nickel, cobalt and M element, which may be 1.8M, 1.9M, 2.0M, 2.1M, and 2.2M, etc., and the flow rate of the first mixed metal salt solution may be 400 L/h, 420 L/h, 450 L/h, 480 L/h, and 500 L/h, etc.

Further, a salt in the first mixed metal salt solution is any one of nitrate, chloride salt and sulfate, and may be any of the above salts, such as all may be nitrates, using nickel nitrate, cobalt nitrate and manganese nitrate (or aluminum nitrate) as raw materials.

In some embodiments, the base solution may be prepared using an ammonia solution and a sodium hydroxide solution. the base solution may have an ammonia concentration of 4.5 g/L to 5.5 g/L, and a pH value of 11.8 to 12.2 to satisfy the reaction conditions of the coprecipitation. Specifically, the base solution may have the ammonia concentration of 4.5 g/L, 5.0 g/L, and 5.5 g/L, etc., the pH value of 11.8, 11.9, 12.0, 12.1, and 12.2, etc., and a volume of the base solution may account for 60% to 80% of the volume of the reactor.

S2. Preparation of reinforcement precursor inner core

Subjecting the precursor inner core and a reinforcement solution for mixing for reacting, and calcining, introducing a reinforcement aid into a calcined material to obtain a reinforcement precursor inner core. Wherein, the reinforcement aid is at least one selected from the group consisting of $LiAlO_2$, $LiMn_2O_4$ and $LiCoPO_4$, and the reinforcement aid may be any one or more of the above. A sol-gel method is used to reinforce the grain boundaries of the primary particles in the precursor inner core and enhance the grain boundary strength of the primary particles.

In some embodiments, a preparation process of the reinforcement precursor inner core includes: subjecting the precursor inner core and the reinforcement solution for mixing and ultrasonicating for 10 min to 60 min, reacting a resulting mixture for 10 min to 60 min at a temperature of 100°C to 150°C and a pressure of 10 MPa to 20 MPa, carrying out a solid-liquid separation after the reaction is completed, and calcining an obtained solid material. The reaction is performed under high temperature and high pressure conditions, and the solvent is vaporized by heating to pressurize the reaction solution to ensure that the precursor inner core is completely infiltrated.

Specifically, subjecting the precursor inner core and the reinforcement solution for mixing and ultrasonicating for 10 min, 20 min, 30 min, 40 min, 50 min, and 60 min, etc. The high temperature and high pressure reaction may be performed in a general high-pressure reactor. The reaction temperature may be controlled at 100°C, 110°C, 120°C, 130°C, 140°C, and 150°C, etc., the reaction pressure may be controlled at 10 MPa, 13 MPa, 15 MPa, 18 MPa, and 20 MPa, etc., and the reaction under a constant pressure may last for 10 min, 20 min, 30 min, 40 min, 50 min, and 60 min, etc.

The raw materials in the reinforcement solution may be calcined to obtain the above-mentioned reinforcement aid. If the reinforcement aid is $LiMn_2O_4$, the raw materials may be manganese acetate and lithium hydroxide.

In some embodiments, the reinforcement solution further includes a thickener, and a viscosity of the reinforcement solution is made to be 5 mPa·s to 8 mPa·s by regulating a dosage of the thickener. A high viscosity is conducive to the retention of the reinforcement solution in the pores of the precursor inner core and further crystallization during the calcination process. That is, if the viscosity is too low, the doping amount is low as well; if the viscosity is too high, it will not easily enter the pores, resulting in too low doping amount. The thickener is at least one selected from the group consisting of carbomer, xanthan gum, gelatin and starch, and the thickener may be any one or more of the above. The dosage of the reinforcement solution in 1 g the precursor inner core is 90 mL to 110 mL, such as 90 mL, 95 mL, 100 mL, 105 mL, and 110 mL.

In some embodiments, a calcination temperature is controlled at 600°C to 700°C., and a calcination time is 3 h to 8 h. After calcination, a reinforcement aid may be introduced into the precursor inner core to enhance the grain boundary strength of the primary particles. Specifically, the calcination temperature may be 600°C, 620°C, 650°C, 680°C, and 700°C, etc., and the calcination time may be 3h, 4h, 5h, 6h, 7h, and 8h, etc.

In some embodiments, the solid material may be firstly dried at 80°C to 120°C for 5 h to 10 h, then calcined to fully remove the moisture on the surface before calcination. Specifically, a drying temperature may be 80°C, 90°C, 100°C, 110°C, and 120°C, etc.; and a drying time may be 5 h, 6 h, 7 h, 8 h, 9 h, and 10 h, etc.

S3. Preparation of a ternary precursor with a core-shell structure

Performing a coprecipitation reaction using a nickel salt, a cobalt salt, an M salt and a first doping element compound, to continuously grow a shell on the reinforcement precursor inner core, so that to obtain a ternary precursor with a core-shell structure.

In some embodiments, a preparation process of the ternary precursor having a core-shell structure includes: adding the reinforcement precursor inner core to a base solution in a reactor, and introducing a second mixed metal salt solution, a second precipitant solution and a second complexing agent solution to the reactor for a coprecipitation reaction; wherein, the second mixed metal salt solution contains a nickel salt, a cobalt salt, an M salt and a first doping element compound, and by regulating an addition rate of the second mixed metal salt solution, an addition rate of the nickel, cobalt and M elements during the coprecipitation reaction process is made to be lower than an addition rate when preparing the precursor inner core, and by reducing the addition rate of the second mixed metal salt solution to control the reaction rate of the coprecipitation reaction, it is conducive to obtaining a denser shell.

Further, in the second mixed metal salt solution, a molar ratio of nickel, cobalt and M elements is 30-60: 20-35: 20-35. The preparation of a dense, low-Ni-content, and element-doped shell is conducive to reducing the contact with the electrolytic solution, and the element doping and low-Ni-content are conducive to improving the strength and stability of the crystal structure, thereby improving its strain resistance and inhibiting the diffusion of internal cracks to the interface. In the second mixed metal salt solution, a total molar concentration of nickel, cobalt and M element is 1.8M to 2.2M, and before adding them into the reactor, a pH value of the second mixed metal salt solution is adjusted to 2 to 5 by adding an acid to prevent precipitation. During the coprecipitation reaction, the second mixed metal salt solution may be slowly dropped into the reactor using a peristaltic pump, and a flow rate of the second mixed metal salt solution is controlled at 100 L/h to 200 L/h.

Specifically, in the second mixed metal salt solution, the molar ratio of nickel, cobalt and M elements may be 30: 35: 35, 40: 30: 30, 50: 25: 25, and 60: 20: 20, etc. In the second mixed metal salt solution, the total molar concentration of nickel, cobalt and M elements may be 1.8M, 1.9M, 2.0M, 2.1M, and 2.2M, etc.; and before adding the second mixed metal salt solution into the reactor, the pH value of which may be adjusted to 3.5, 3.8, 4.0, 4.2, and 4.5, etc. The flow rate of the second mixed metal salt solution may be 100 L/h, 120 L/h, 150 L/h, 180 L/h, and 200 L/h, etc.

Further, based on a total molar amount of the nickel, cobalt and M elements, a ratio of a total molar amount of the metal in the reinforcement precursor inner core to a total molar amount of the metal in the second mixed metal salt solution is 4-12: 1; by regulating the dosage of the inner core and shell, the ratio of the inner core and shell may be better regulated to improve the electrochemical performance of the material. Specifically, the ratio of the total molar amount of metal in the reinforcement precursor inner core to the total molar amount of metal in the second mixed metal salt solution may be 4: 1, 5: 1, 6: 1, 7: 1, 8: 1, 9: 1, 10: 1, 11: 1, and 12: 1, etc.

The first doping element compound has at least one doping element selected from the group consisting of Ti, Al, Zr and Mg, and the first doping element compound has a doping element of any one or more of the above. The first doping element compound is at least one selected from the group consisting of titanium disulfate, sodium metaaluminate, zirconium nitrate, zirconium acetate, zirconium sulfate, magnesium sulfate and magnesium nitrate, the first doping element compound may be any one or more of the above, and the dosage of which is regulated according to the doping amount of the doping element.

In some embodiments, the base solution in the reactor is water, and a volume of water added to the reactor may be 15% to 25% of the volume of the reactor. The second precipitant solution is a sodium hydroxide solution with a mass fraction of 30% to 40%, and a pH value during the reaction is made to 10.8 to 11.2 by regulating an addition rate of the second precipitant solution. The second complexing agent solution is an ammonia solution with a mass fraction of 18% to 22%, and during the coprecipitation reaction, an ammonia concentration in the reactor is controlled at 3 g/L to 7 g/L. Specifically, the mass fraction of the sodium hydroxide solution may be 30%, 32%, 34%, 36%, 38%, and 40%, etc., and the pH value during the reaction may be 10.8, 10.9, 11.0, 11.1, and 11.2, etc.; the mass fraction of the ammonia solution may be 18%, 19%, 20%, 21%, and 22%, etc., and the ammonia concentration in the reactor during the coprecipitation reaction may be controlled at 3 g/L, 4 g/L, 5 g/L, 6 g/L, and 7 g/L, etc.

In some embodiments, the coprecipitation reaction may be performed in an inert atmosphere such as nitrogen, a reaction temperature of the coprecipitation reaction is 75°C to 95°C, and a rotation speed during the reaction is 300 rpm to 500 rpm to make reaction proceed at a uniform speed. Specifically, the reaction temperature may be 75°C, 80°C, 85°C, 90°C, and 95°C, etc., and the rotation speed during the reaction may be 300 rpm, 400 rpm, and 500 rpm, etc.

Further, after introducing the second mixed metal salt solution, the reaction is continued for 0.5 h to 2.0 h, such as 0.5 h, 1.0 h, 1.5 h, and 2.0 h, etc., and then a solid-liquid separation is performed, and an obtained solid material is washed with water and dried to obtain a precursor with a dense shell.

S4. Preparation of ternary cathode material

Mixing the ternary precursor, a second doping element compound and a lithium source and calcining a resulting mixture to obtain the ternary cathode material.

The second doping element compound has at least one doping element selected from the group consisting of Zr, Sr, Mo, Ba, W, B, Ti, Mg, Li, F, Si, Ca, Cu, La, P, Ce, Bi, In, Nb and Y, and the second doping element compound has a doping element of any one or more of the above. The second doping element compound is at least one selected from the group consisting of oxides, fluorides, carbonates, hydroxides, nitrides, borides and nitrates, the second doping element compound may be any one or more of the above, and by regulating a dosage of the second doping element compound, a doping amount of the doping element is made to satisfy the requirements.

In some embodiments, the lithium source may be lithium hydroxide, but is not limited thereto. A molar ratio of a total amount of nickel, cobalt and M elements in the ternary precursor to a lithium content in the lithium source is 1: 1.05-1.1, such as it may be 1: 1.05, 1: 1.06, 1: 1.07, 1: 1.08, 1: 1.09, and 1: 1.10, etc.

In some embodiments, the calcining is performed in an oxygen-containing atmosphere. The calcining comprises a first calcination performed at 400°C to 500°C for 2 h to 6 h, and then a second calcination performed at 750°C to 850°C for 10 h to 15 h. Through a two-stage calcination process, that is, a low-temperature calcination performed first and then a high-temperature calcination, a uniform cathode material can be obtained. Specifically, the oxygen-containing atmosphere may be an oxygen atmosphere, but is not limited thereto. The temperature of the first calcination may be 400°C, 420°C, 450°C, 480°C, and 500°C, etc., and the first calcination time may be 2 h, 3 h, 4 h, 5 h, and 6 h, etc.; the temperature of the second calcination may be 750°C, 780°C, 800°C, 820°C, and 850°C, etc., and the second calcination time may be 10 h, 11 h, 12 h, 13 h, 14 h, and 15h, etc.

In some embodiments, the ternary precursor, the second doping element compound and the lithium source are first mixed and ground, and then calcined, the grinding allows the raw materials to be better and evenly mixed, which is conducive to improving the uniformity of the cathode material.

It should be noted that the cathode material prepared in the embodiments of the present disclosure have high anti-cracking strength, a core-shell structure, the primary particles in the inner core are radially arranged, and have a certain porosity; the shell is denser and has doping elements and lower Ni content.

The embodiments of the present disclosure also provide a cathode sheet including the above-mentioned cathode material, the cathode sheet is provided with a cathode active coating, and the cathode material presents in the cathode active coating.

The embodiments of the present disclosure also provide a lithium ion battery including the above-mentioned cathode sheet, and further including an anode sheet, an electrolytic solution, and a separator, etc., to form a complete battery structure with good cycle performance.

Specifically, the specific types of the anode sheet, the electrolytic solution, and the separator are not limited. During the charging and discharging process of the secondary battery, the active ions are intercalated and de-intercalated back and forth between the cathode sheet and the anode sheet, and the electrolytic solution plays the role of conducting ions between the cathode sheet and the anode sheet.

In other embodiments, the battery does not have to be in the form of a secondary battery, it may also be in the form of a battery module, or a battery pack, etc.

The embodiments of the present disclosure provide a device including the above-mentioned secondary battery, battery module or battery pack. The secondary battery, battery module or battery pack may serve as a power source for the device or as an energy storage unit for the device. The device may be, but is not limited to, a mobile device such as a mobile phone, a laptop computer, etc., an electric vehicle such as a full electric vehicle, a hybrid electric vehicle, a plug-in hybrid electric vehicle, an electric bicycle, an electric scooter, an electric golf cart, and an electric truck, etc., an electric train, a ship and a satellite, and an energy storage system, etc.

The features and performance of the present disclosure are further described in detail below with reference to the Examples.

The present disclosure provides the cathode materials shown in Table 1 and Table 2, and the anti-cracking strength of the cathode materials is evaluated; and the cycle performance and electrochemical performance of which are further tested, the results are listed in Table 3. The method for characterization and performance testing of the cathode materials prepared in the Examples and Comparative Examples are as follows.

(1) A JEOL JSM-6490LV scanning electron microscope was used to observe the overall and cross-sectional microstructure of the material. In order to obtain the complete cross-sectional morphology of the sample, a focused ion beam method was used to cut the sample. The porosity analysis was performed for the ion sectional view, and the porosity analysis method was as follows: NanoMeasurer software was used to measure the porosity of the ion sectional view.

(2) The active material was coated on an ultra-thin aluminum foil, which was then assembled into a mold battery with a beryllium window. The battery was then subjected to in-situ XRD testing on an EMPYREAN type XRD diffractometer. During the test, the battery was subjected to charging and discharging cycles at a current density of 0.1C, the 2θ range of the X-ray scan was 10° to 60°, and each scanning cycle was 600s. The values of the cell parameters c and a during the charging process at a voltage of 3 V to 4.5V and after 10 cycles were recorded, and $\Delta \left(\frac{c}{a}\right)_{max}$ and $\Delta \left(\frac{c}{a}\right)_t$ were calculated.

(3) Particle size: the test was performed using a MS3000 type laser particle size analyzer.

(4) Tap density TD: the tap density was determined according to the method for determining the tap density of powder products in GB/T 21354-2008.

(5) BET specific surface area: the specific surface area of the material was obtained by analyzing the data at the medium and low pressure stages in the nitrogen adsorption/desorption curve through the BET formula. The test was performed on an Autosorb IQ2 type fully automatic specific surface area and pore size analyzer manufactured by Anton Paar Instruments, Austria. The BET of the cathode material during the first charging (denoted as $BET^0$) and after 100 charging/discharging cycles (denoted as $BET^t$) were measured and calculated, respectively. The sampling method after cycle was performed as follows: after cycle, the battery was flexibly disassembled, the electrode sheet was taken out and soaked in Dimethyl sulfoxide (DMSO) and stirred until the electrode powder was completely detached; the electrode powder was rinsed with ethanol for 5 times and then dried at 60°C to a constant weight; the carbon material and cathode material in the electrode powder were separated by a magnetic separator, and the separated cathode material was the sample to be tested.

(6) Chemical composition analysis was performed using a PE Avio200 type inductively coupled plasma optical emission spectroscopy (ICP-OES).

(7) The samples were characterized using a FEI Titan Cubed G2 60-300 transmission electron microscopy. First, the local diffraction pattern of the material was obtained by selected area electron diffraction (SAED) to determine the crystal structure, and then imaged through high-angle annular dark field. The HAADF-STEM mode was used to obtain high-resolution atomic arrangement images, and the EDS detector was conjunctively used to qualitatively and quantitatively analyze the elemental distribution of the material.

(8) Determination of crushing strength: The prepared powder was dispersed in N-Methylpyrrolidone (NMP) by ultrasonic treatment, and the obtained dispersion was dropped on a 2 cm×2 cm smooth silicon wafer and dried under a heating lamp to obtain a well-dispersed sample. The samples were observed under an optical microscope, and particles spaced apart from each other by more than 100 μm were selected. A 100 μm-diameter flat indentation head was used, and the indentation tests on marked particles were performed on the CSM UNHT nanoindenter to obtain the pressure-displacement relation curve. During the real-time monitoring of the indentation experiment, a sudden drop in pressure was used to determine whether the particles had been crushed, and the maximum pressure P before the sudden pressure drop was used to calculate the crushing strength (St) of the particles according to formula (1), n particles were taken from each sample for testing, and the average crushing strength ($\overline{St}$) was calculated according to formula (2).

$$St=2.8\times P/(\pi d^2) \qquad \text{formula (1)};$$

$$\overline{St}= \left( \sum_{i=1}^{n} St_i \right) /n \qquad \text{formula (2)};$$

wherein St represents the crushing strength in MPa; P represents the maximum pressure value before the point of sudden pressure drop in mN; d represents the particle diameter of the cathode material in μm; $\overline{St}$ represents the average crushing strength, n is a sample size, and n was 10 in the test of the specific embodiments of the present disclosure.

(9) Electrochemical performance: the rate performance test was performed using a LANHE CT2001A battery testing system.

Electrode preparation method: a ternary cathode material, conductive carbon black and polyvinylidene difluoride (PVDF) were weighed at a mass ratio of 8: 1: 1, ground thoroughly and put into a flask, an appropriate amount of NMP solvent was added, and stirred on a stirrer for 24 h to form a uniform slurry. The prepared slurry was evenly coated on a clean aluminum foil using a wet film preparation apparatus, with a loading amount controlled at 2.5+0.05 mg/cm$^2$, and which was then placed in a vacuum drying oven at 100°C for 24 hours to oven-dry until no material was attached. The electrode sheet was then placed on an oil hydraulic press and rolled in at a pressure of 6 MPa.

Button battery assembly: the cathode sheet was further punched into a circular electrode sheet with a diameter of 12 mm, and then a metal lithium disc was used as the anode sheet, Celgard 2300 was used as the separator, and 1M $LiPF_6$ solution (the solvent was a mixed solution of Ethyl methyl carbonate (EMC), Diethyl Carbonate (DC) and dimethyl carbonate (DMC) at a volume ratio of (1: 1: 1) was used as the electrolytic solution, which were then assembled into a CR2032 button battery.

The parameters such as particle size D50, TD, BET, crushing strength, etc., prepared in the Examples and Comparative Examples were shown in Tables 1, 2 and 3, and the anti-cracking strength was calculated, the results were as shown in Table 2.

Table 1 Chemical formula, D50 and TD test results of cathode materials

| Samples | Chemical Formula | D(50), $\mu$m | TD, g/cm$^3$ |
|---|---|---|---|
| Example 1 | $LiNi_{0.761}Co_{0.110}Mn_{0.123}Ti_{0.006}O_2$ | 10.2 | 2.2 |
| Example 2 | $LiNi_{0.764}Co_{0.112}Mn_{0.12}Ti_{0.004}O_2$ | 9.8 | 2.4 |
| Example 3 | $LiNi_{0.762}Co_{0.11}Mn_{0.122}Ti_{0.006}O_2$ | 9.7 | 2 |
| Example 4 | $LiNi_{0.772}Co_{0.11}Mn_{0.11}Al_{0.006}Mg_{0.002}O_2$ | 10.1 | 2.1 |
| Example 5 | $LiNi_{0.755}Co_{0.122}Mn_{0.119}Zr_{0.004}P_{0.003}O_{1.997}$ | 11.2 | 2.2 |
| Example 6 | $LiNi_{0.756}Co_{0.117}Mn_{0.117}Al_{0.004}Ti_{0.004}B_{0.002}O_2$ | 9.2 | 2.2 |
| Example 7 | $LiNi_{0.737}Co_{0.124}Mn_{0.125}Ti_{0.006}Al_{0.008}O_2$ | 10.1 | 2.2 |
| Example 8 | $LiNi_{0.742}Co_{0.126}Mn_{0.126}Ti_{0.006}P_{0.002}O_{1.998}$ | 10.2 | 2.3 |
| Example 9 | $LiNi_{0.742}Co_{0.125}Mn_{0.127}Ti_{0.006}O_2$ | 10 | 2.2 |
| Example 10 | $LiNi_{0.740}Co_{0.124}Mn_{0.130}Ti_{0.006}O_2$ | 10.2 | 2.4 |
| Comparative Example 1 | $LiNi_{0.763}Co_{0.111}Mn_{0.12}Ti_{0.006}O_2$ | 9.8 | 2.4 |
| Comparative Example 2 | $LiNi_{0.761}Co_{0.11}Mn_{0.123}Ti_{0.006}O_2$ | 10.3 | 2.3 |
| Comparative Example 3 | $LiNi_{0.761}Co_{0.11}Mn_{0.123}Ti_{0.006}O_2$ | 8.7 | 2.1 |
| Comparative Example 4 | $LiNi_{0.763}Co_{0.111}Mn_{0.12}Ti_{0.006}O_2$ | 9.8 | 2.3 |

Table 2 Cathode materials provided in examples and comparative Examples

| Samples | Average crushing strength, MPa | $\Delta\left(\frac{c}{a}\right)_{max}$ | $\Delta\left(\frac{c}{a}\right)$ | Anti-cracking strength, MPa |
|---|---|---|---|---|
| Example 1 | 131 | 0.241 | 0.12 | 4.53 |
| Example 2 | 121 | 0.244 | 0.11 | 4.51 |
| Example 3 | 117 | 0.243 | 0.12 | 4.01 |
| Example 4 | 135 | 0.248 | 0.07 | 7.78 |
| Example 5 | 131 | 0.245 | 0.13 | 4.11 |
| Example 6 | 138 | 0.238 | 0.04 | 14.50 |
| Example 7 | 136 | 0.239 | 0.10 | 5.69 |
| Example 8 | 134 | 0.240 | 0.11 | 5.08 |
| Example 9 | 124 | 0.241 | 0.11 | 4.68 |
| Example 10 | 132 | 0.240 | 0.11 | 5.00 |
| Comparative Example 1 | 102 | 0.245 | 0.13 | 3.20 |
| Comparative Example 2 | 95 | 0.251 | 0.15 | 2.52 |
| Comparative Example 3 | 87 | 0.241 | 0.16 | 2.26 |
| Comparative Example 4 | 93 | 0.262 | 0.14 | 2.54 |

Table 3 Cycle performance and electrochemical performance test results of examples and comparative examples

| Samples | BET$^0$, m$^2$/g | BET$^t$, m$^2$/g | 0.1C | 1C | | 5C |
|---|---|---|---|---|---|---|
| | | | First discharge specific capacity, mAh/g | First discharge specific capacity, mAh/g | Capacity retention rate after 100 cycles, % | First discharge specific capacity, mAh/g |
| Example 1 | 0.54 | 0.60 | 220 | 205.5 | 98.8 | 172.4 |

(continued)

| Samples | BET$^0$, m$^2$/g | BET$^t$, m$^2$/g | 0.1C | 1C | | 5C |
|---|---|---|---|---|---|---|
| | | | First discharge specific capacity, mAh/g | First discharge specific capacity, mAh/g | Capacity retention rate after 100 cycles, % | First discharge specific capacity, mAh/g |
| Example 2 | 0.42 | 0.48 | 217 | 200.9 | 98.4 | 147.6 |
| Example 3 | 0.58 | 0.69 | 221 | 205.8 | 97.9 | 159.1 |
| Example 4 | 0.47 | 0.47 | 216 | 198.1 | 99.5 | 140.4 |
| Example 5 | 0.38 | 0.42 | 211 | 191.0 | 98.2 | 130.8 |
| Example 6 | 0.44 | 0.44 | 212 | 193.1 | 99.7 | 135.7 |
| Example 7 | 0.52 | 0.54 | 209 | 189.1 | 99.2 | 125.4 |
| Example 8 | 0.54 | 0.57 | 212 | 192.5 | 99.1 | 131.4 |
| Example 9 | 0.56 | 0.61 | 211 | 191.8 | 99.1 | 135.0 |
| Example 10 | 0.54 | 0.57 | 210 | 190.1 | 99.4 | 138.6 |
| Comparative Example 1 | 0.41 | 0.50 | 214 | 195.8 | 96.2 | 132.7 |
| Comparative Example 2 | 0.61 | 0.84 | 223 | 204.0 | 89.5 | 142.7 |
| Comparative Example 3 | 0.72 | 0.92 | 223 | 208.5 | 95.6 | 173.9 |
| Comparative Example 4 | 0.58 | 0.82 | 218 | 201.4 | 86.3 | 150.4 |

It may be seen from the data in Tables 1, 2 and 3 that the greater the anti-cracking strength of the cathode material, the smaller the rate of change of the specific surface area (BET$^t$/BET$^0$) of the material, indicating that the greater the anti-cracking strength of the material, the stronger its ability to resist the generation of microcracks during the charging and discharging cycle, and the better the cycle stability. The anti-cracking strength of the Comparative Examples exceeds the range as defined in the present application, resulting in a significant decrease in cycle performance.

Example 1

This Example provided a preparation method of a cathode material (LiNi$_{0.761}$Co$_{0.11}$Mn$_{0.123}$Ti$_{0.006}$O$_2$) for a lithium ion battery, including the following steps. The obtained cathode material was the product of Example 1 as described above.

(1) Preparation of precursor inner core

Metal sulfates were weighed according to a molar ratio of nickel, cobalt, and manganese of 8: 1: 1 and dissolved in deionized water to form a metal salt solution with a total molar concentration of metal ions of 2 M. 70% by volume of coprecipitation base solution was added to the reactor, the base solution had an ammonia concentration of 5 g/L, and a pH of 12±0.2, and nitrogen was introduced, then the metal salt solution, a precipitant sodium hydroxide solution (30 wt%) and a complexing agent ammonia solution (20 wt%) were simultaneously introduced into the reactor through a feed pump, and the coprecipitation reaction was performed at a stirring speed of 600 rpm and a temperature of 85°C. During the reaction, a flow rate of the ammonia solution was adjusted to stabilize an ammonia concentration at 4 g/L, a flow rate of sodium hydroxide solution was adjusted to stabilize a pH of the reaction at 11, a flow rate of the metal salt solution was adjusted to 450 L/h, and the reaction conditions were maintained until a D50 particle size was 8 μm, the introductions were stopped and the mixture was aged for 12 h. After aging, the slurry was washed with 60 g/L of NaOH solution at 80°C to remove the sodium and sulfur residues, then rinsed with pure water at 80°C, dried at 120°C for 12 h, and sieved to obtain the ternary precursor inner core (with a porosity of 8.44%).

(2) Preparation of reinforcement precursor

A reinforcement solution was prepared, wherein the reinforcement solution was an aqueous solution containing 2 wt% of manganese acetate, 0.15 wt% of lithium hydroxide, and 1.5 wt% of starch, a viscosity of the reinforcement solution was 6.5 mPa.s.

The precursor inner core obtained in step (1) was added to the reinforcement solution, with the solid-liquid ratio of the precursor inner core to the reinforcement solution of 1 g: 100 mL, the mixture was ultrasonically treated for 30 min to obtain a reaction solution, which was placed in a high-pressure reactor, the solvent was vaporized by heating to pressurize the reaction solution, a heating temperature was controlled at 100°C to 110°C and a pressure was controlled at 15 MPa to ensure that the precursor inner core was completely infiltrated, the pressure was maintained for 30 min, then the reaction solution was filtered. The solid material obtained by filtration was dried at 100°C for 8 h, and then calcined at 650°C for 6 h, then cooled to obtain the reinforcement precursor inner core.

(3) Preparation of a ternary precursor with a core-shell structure

Sulfates of Nickel, cobalt and manganese and titanium disulfate were dissolved in deionized water and an acid is added to adjust a pH to 4 to form a metal salt solution, wherein a molar ratio of nickel, cobalt and manganese in the nickel salt, cobalt salt and manganese salt in the metal salt solution was 50: 30: 20, a molar concentration of the first doping element compound was 0.11 M, and a total molar concentration of nickel, cobalt and manganese ions in the metal salt solution was 2 M. A ratio of the total molar amount of nickel, cobalt and manganese in the reinforcement precursor inner core prepared in step (2) to the total molar amount of nickel, cobalt and manganese in the metal salt solution was 8: 1.

20% by volume of deionized water was added to the reactor and nitrogen was introduced, the reinforcement precursor inner core obtained in step (2) was added, and the metal salt solution was slowly dropped into the reactor at 150 L/h using a peristaltic pump under stirring, a pH of the reaction solution was adjusted to $11\pm0.2$ using sodium hydroxide solution, and a concentration of ammonia in the reactor was controlled at 5 g/L using ammonia solution; after the addition was completed, the mixture was reacted for 1 h, filter-pressed and rinsed with pure water at 80°C, dried at 120°C for 12 h to obtain a ternary precursor with a core-shell structure.

(4) Preparation of ternary cathode material

The ternary precursor obtained in step (3) is mixed and ground with lithium hydroxide, and then calcined to obtain a ternary cathode material having a chemical formula of $LiNi_{0.761}Co_{0.11}Mn_{0.123}Ti_{0.006}O_2$. The ternary precursor and lithium source were added according to a molar ratio of Li/(Ni+Co+Mn) of 1.05. Calcination conditions: in an oxygen environment, the mixture was heated to 450°C at a rate of 1°C/min and maintaining the temperature for 4 h, then heated to 800°C at a rate of 2°C/min and maintaining the temperature for 12 h.

Example 2

The difference from Example 1 lied in that the step (1) was as follows.

Metal sulfates were weighed according to a molar ratio of nickel, cobalt, and manganese of 8: 1: 1 and dissolved in deionized water to form a metal salt solution with a total molar concentration of metal ions of 2 M. 60% by volume of coprecipitation base solution was added to the reactor, the base solution had an ammonia concentration of 5.5 g/L, and a pH of $12\pm0.2$, and nitrogen was introduced, then the metal salt solution, a precipitant sodium hydroxide solution (30 wt%) and a complexing agent ammonia solution (20 wt%) were simultaneously introduced into the reactor through a feed pump, and the coprecipitation reaction was performed at a stirring speed of 800 rpm and a temperature of 75°C. During the reaction, a flow rate of the ammonia solution was adjusted to stabilize an ammonia concentration at 7 g/L, a flow rate of sodium hydroxide solution was adjusted to stabilize a pH of the reaction at 11, a flow rate of the metal salt solution was adjusted to 450 L/h, and the reaction conditions were maintained until a D50 particle size was 8 $\mu$m, the introductions were stopped and the mixture was aged for 12 h. After aging, the slurry was washed with 60 g/L of NaOH solution at 80°C to remove the sodium and sulfur residues, then rinsed with pure water at 80°C, dried at 120°C for 12 h, and sieved to obtain the ternary precursor inner core (with a porosity of 4.13%).

Example 3

The difference from Example 1 lied in that the step (1) was as follows.

Metal sulfates were weighed according to a molar ratio of nickel, cobalt, and manganese of 8: 1: 1 and dissolved in deionized water to form a metal salt solution with a total molar concentration of metal ions of 2 M. 80% by volume of coprecipitation base solution was added to the reactor, the base solution had an ammonia concentration of 4.5 g/L, and a pH of $12\pm0.2$, and nitrogen was introduced, then the metal salt solution, a precipitant sodium hydroxide solution (30 wt%) and a complexing agent ammonia solution (20 wt%) were simultaneously introduced into the reactor through a feed pump, and the coprecipitation reaction was performed at a stirring speed of 800 rpm and a temperature of 95°C. During the reaction, a flow rate of the ammonia solution was adjusted to stabilize an ammonia concentration at 3 g/L, a flow rate of sodium hydroxide solution was adjusted to stabilize a pH of the reaction at 11, a flow rate of the metal salt solution was adjusted to 450 L/h, and the reaction conditions were maintained until a D50 particle size was 8 μm, the introductions were stopped and the mixture was aged for 12 h. After aging, the slurry was washed with 60 g/L of NaOH solution at 80°C to remove the sodium and sulfur residues, then rinsed with pure water at 80°C, dried at 120°C for 12 h, and sieved to obtain the ternary precursor inner core (with a porosity of 11.85%).

Example 4

The difference from Example 1 only lied in that some conditions in steps (2) to (4) were different, specifically as follows.

In step (2), the reinforcement solution was an aqueous solution containing a concentration of 2 wt% of aluminum isopropoxide and 0.24 wt% of lithium hydroxide, and a viscosity of the reinforcement solution was 5.8 mPa. s. A solid-liquid ratio of the precursor inner core to the reinforcement solution was 1 g: 100 mL. Drying was performed at 100°C for 8 h, and calcination was performed at 600°C for 5 h.

In step (3), sulfates of nickel, cobalt and manganese and magnesium sulfate were dissolved in deionized water and an acid is added to adjust a pH to 4 to form a metal salt solution, wherein a molar ratio of nickel, cobalt and manganese in the nickel salt, cobalt salt and manganese salt in the metal salt solution was 60: 20: 20, a concentration of the magnesium sulfate was 0.018M, and the total molar concentration of nickel, cobalt and manganese ions in the metal salt solution was 2 M. A ratio of the total molar amount of nickel, cobalt and manganese in the reinforcement precursor inner core to the total molar amount of nickel, cobalt and manganese in the metal salt solution was 8: 1. 20% by volume of deionized water was added to the reactor and nitrogen was introduced, the reinforcement precursor inner core obtained in step (2) was added, and the metal salt solution was slowly dropped into the reactor at 100 L/h using a peristaltic pump under stirring, a pH of the reaction solution was adjusted to 11+0.2 using sodium hydroxide solution, and a concentration of ammonia in the reactor was controlled at 3 g/L using ammonia solution; after the addition was completed, the mixture was reacted for 1 h, filter-pressed and rinsed with pure water at 80°C, dried at 120°C for 12 h to obtain a ternary precursor with a core-shell structure.

In step (4), the ternary precursor and lithium source were added according to a molar ratio of Li/(Ni+Co+Mn) of 1.05. Calcination conditions: in an oxygen environment, the mixture was heated to 500°C at a rate of 1°C/min and maintaining the temperature for 4 h, then heated to 750°C at a rate of 2°C/min and maintaining the temperature for 12 h.

Example 5

The difference from Example 1 only lied in that some conditions in steps (2) to (4) were different, specifically as follows.

In step (2): the reinforcement solution was an aqueous solution containing a concentration of 2 wt% of cobalt acetate, 0.75 wt% of lithium acetate, 1.1 wt% of phosphoric acid, and 1.8 wt% of Carbomer 940, and a viscosity of the reinforcement solution was 7.4 mPa. s. A solid-liquid ratio of the precursor inner core to the reinforcement solution was 1 g: 100 mL. Drying was performed at 100°C for 8 h, and calcination was performed at 700°C for 10 h.

In step (3), sulfates of nickel, cobalt and manganese and zirconium acetate were dissolved in deionized water and an acid is added to adjust the pH to 5 to form a metal salt solution, wherein a molar ratio of nickel, cobalt and manganese in the nickel salt, cobalt salt and manganese salt in the metal salt solution was 60: 20: 20, a concentration of the zirconium acetate was 0.04 M, and a total molar concentration of nickel, cobalt and manganese ions in the metal salt solution was 2 M. A ratio of the total molar amount of nickel, cobalt and manganese in the reinforcement precursor inner core to a total molar amount of nickel, cobalt and manganese in the metal salt solution was 4: 1. 20% by volume of deionized water was added to the reactor and nitrogen was introduced, the reinforcement precursor inner core obtained in step (2) was added, and the metal salt solution was slowly dropped into the reactor at 150 L/h using a peristaltic pump under stirring, a pH of the reaction solution was adjusted to 11+0.2 using sodium hydroxide solution, and a concentration of ammonia in the reactor was controlled at 5 g/L using ammonia solution; after the addition was completed, the mixture was reacted for 1 h, filter-pressed and rinsed with pure water at 80°C, dried at 120°C for 12 h to obtain a ternary precursor with a core-shell structure.

In step (4), the ternary precursor and lithium source were added according to a molar ratio of Li/(Ni+Co+Mn) of 1.05. Calcination conditions: in an oxygen environment, the mixture was heated to 500°C at a rate of 1°C/min and maintaining the temperature for 4 h, then heated to 850°C at a rate of 2°C/min and maintaining the temperature for 12 h.

Example 6

The difference from Example 1 only lied in that some conditions in steps (2) to (4) were different, specifically as follows.

In step (2), the reinforcement solution was an aqueous solution containing a concentration of 2 wt% of aluminum isopropoxide and 0.24 wt% of lithium hydroxide, and a viscosity of the reinforcement solution was 5.8 mPa. s. A solid-liquid ratio of the precursor inner core to the reinforcement solution was 1 g: 100 mL. Drying was performed at 100°C for 8 h, and calcination was performed at 700°C for 10 h.

In step (3), sulfates of nickel, cobalt and manganese sulfates and titanium disulfate were dissolved in deionized water and an acid is added to adjust the pH to 4 to form a metal salt solution, wherein a molar ratio of nickel, cobalt and manganese in the nickel salt, cobalt salt and manganese salt in the metal salt solution was 33: 33: 34, a concentration of the titanium disulfate was 0.1M, and a total molar concentration of nickel, cobalt and manganese ions in the metal salt solution was 2 M. A ratio of the total molar amount of nickel, cobalt and manganese in the reinforcement precursor inner core to the total molar amount of nickel, cobalt and manganese in the metal salt solution was 12: 1. 20% by volume of deionized water was added to the reactor and nitrogen was introduced, the reinforcement precursor inner core obtained in step (2) was added, and the metal salt solution was slowly dropped into the reactor at 200 L/h using a peristaltic pump under stirring, a pH of the reaction solution was adjusted to 11+0.2 using sodium hydroxide solution, and a concentration of ammonia in the reactor was controlled at 7 g/L using ammonia solution; after the addition was completed, the mixture was reacted for 1 h, filter-pressed and rinsed with pure water at 80°C, dried at 120°C for 12 h to obtain a ternary precursor with a core-shell structure.

(4) The ternary precursor and lithium source were added according to a molar ratio of Li/(Ni+Co+Mn) of 1.05, and a doping amount of B element in boron oxide was 0.2%. Calcination conditions: in an oxygen environment, the mixture was heated to 500°C at a rate of 1°C/min and maintaining the temperature for 4 h, then heated to 850°C at a rate of 2°C/min and maintaining the temperature for 12 h.

Example 7

The difference from Example 1 only lied in that: in step (2): the reinforcement solution was an aqueous solution containing a concentration of 2 wt % of aluminum isopropoxide, 0.24 wt % of lithium hydroxide, and 0.62 wt % of starch, and a viscosity of the reinforcement solution was 6.5 mPa.s.

Example 8

The difference from Example 1 only lied in that: in step (2): the reinforcement solution was an aqueous solution containing a concentration of 2 wt% of cobalt acetate, 0.75 wt% of lithium acetate, 1.1 wt% of phosphoric acid, and 0.79 wt% of starch, and a viscosity of the reinforcement solution was 6.5 mPa. s.

Example 9

The difference from Example 1 only lied in that: in step (2): the reinforcement solution was an aqueous solution containing a concentration of 2 wt% of manganese acetate, and 0.15 wt% of lithium hydroxide, and a viscosity of the reinforcement solution was 1.62 mPa. s.

Example 10

The difference from Example 1 only lied in that: in step (2): the reinforcement solution was an aqueous solution containing a concentration of 2 wt % of manganese acetate, 0.15 wt % of lithium hydroxide, and 2.12 wt % of starch, and a viscosity of the reinforcement solution was 7.92 mPa. s.

Comparative Example 1 (with a porosity of less than 4%)

The difference from Example 1 lied in that the step (1) was as follows.

Metal sulfates were weighed according to a molar ratio of nickel, cobalt, and manganese of 8: 1: 1 and dissolved in deionized water to form a metal salt solution with a total molar concentration of metal ions of 2 M. 50% by volume of coprecipitation base solution was added to the reactor, the base solution had an ammonia concentration of 4 g/L, and a pH of 11.5+0.2, and nitrogen was introduced, then the metal salt solution, a precipitant sodium hydroxide solution (30 wt%) and a complexing agent ammonia solution (20 wt%) were simultaneously introduced into the reactor through a feed pump, and the coprecipitation reaction was performed at a stirring speed of 600 rpm and a temperature of 85°C. During the reaction, a flow rate of the ammonia solution was adjusted to stabilize an ammonia concentration at 3 g/L, a flow rate of sodium hydroxide solution was adjusted to stabilize a pH of the reaction at 10, a flow rate of the metal salt solution was adjusted to 450 L/h, and the reaction conditions were maintained until a D50 particle size was 8 μm, the introductions were stopped and the mixture was aged for 12 h. After aging, the slurry was washed with 60 g/L of NaOH solution at 80°C to remove the sodium and sulfur residues, then rinsed with pure water at 80°C, dried at 120°C for 12 h, and sieved to obtain the ternary precursor inner core (with a porosity of 2.2%).

Comparative Example 2 (with the primary particles being granular)

The difference from Example 1 lied in that the step (1) was as follows.

Metal sulfates were weighed according to a molar ratio of nickel, cobalt, and manganese of 8:1:1 and dissolved in deionized water to form a metal salt solution with a total molar concentration of metal ions of 2 M. 50% by volume of coprecipitation base solution was added to the reactor, the base solution had an ammonia concentration of 5 g/L, and a pH of 12±0.2, and nitrogen was introduced, then the metal salt solution, a precipitant sodium hydroxide solution (30 wt%) and a complexing agent ammonia solution (20 wt%) were simultaneously introduced into the reactor through a feed pump, and the coprecipitation reaction was performed at a stirring speed of 300 rpm and a temperature of 50°C. During the reaction, a flow rate of the ammonia solution was adjusted to stabilize an ammonia concentration at 6 g/L, a flow rate of sodium hydroxide solution was adjusted to stabilize a pH of the reaction at 11, a flow rate of the metal salt solution was adjusted to 500 L/h, and the reaction conditions were maintained until a D50 particle size was 8 $\mu$m, the introductions were stopped and the mixture was aged for 12 h. After aging, the slurry was washed with 60 g/L of NaOH solution at 80°C to remove the sodium and sulfur residues, then rinsed with pure water at 80°C, dried at 120°C for 12 h, and sieved to obtain the ternary precursor inner core (with a porosity of 6.7%).

Comparative Example 3 (with the precursor shell being not formed)

The difference from Example 1 lied in that the step (3) was not performed, and the step (4) was as follows.

The ternary precursor was mixed and ground with lithium hydroxide and titanium oxide, and then calcined to obtain the ternary cathode material. The ternary precursor and lithium source were added according to a molar ratio of Li/(Ni+Co+Mn) of 1.05, and a doping amount of Ti element in titanium oxide was 0.2%. Calcination conditions: in an oxygen environment, the mixture was heated to 450°C at a rate of 1°C/min and maintaining the temperature for 4 h, then heated to 800°C at a rate of 2°C/min and maintaining the temperature for 12 h.

Comparative Example 4 (without grain boundary reinforcement)

The difference from Example 1 only lied in that the step (2) was not performed.

Result analysis:

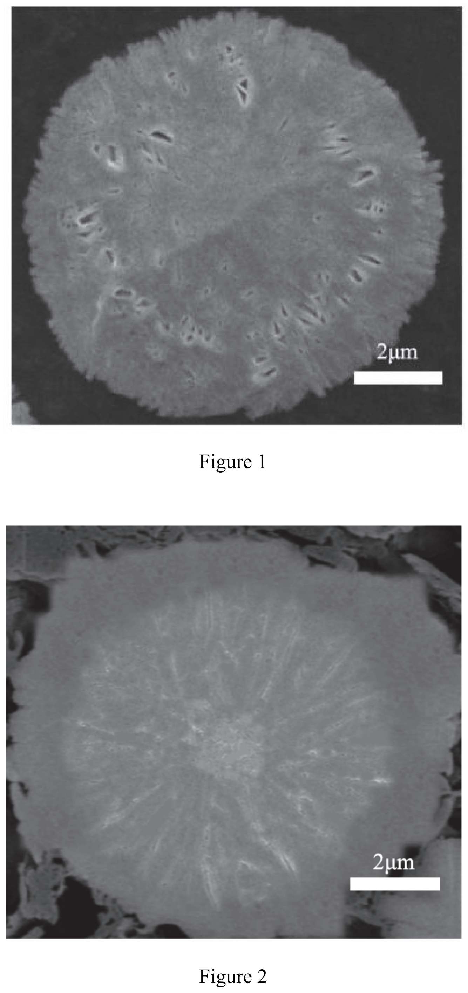

The ion sectional views of the cathode materials prepared in Example 1 and Comparative Example 1 were shown in Figure 1 and Figure 2, from which it may be seen that the core-shell structure may be seen, and the porosity of Example 1 is higher.

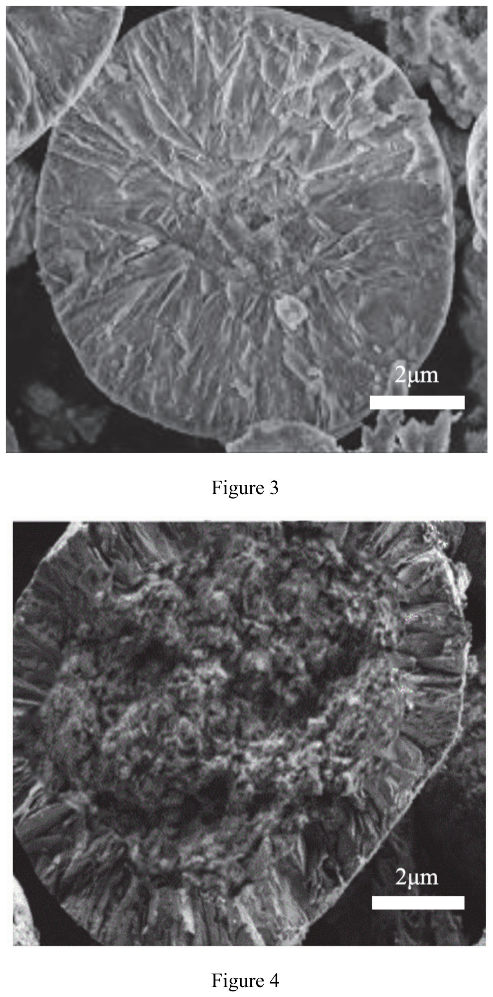

The sectional views of Example 1 and Comparative Example 2 were shown in Figure 3 and Figure 4, from which it may be seen that the primary particles of Example 1 are radially radiating, while the primary particles of Comparative Example 2 are granular.

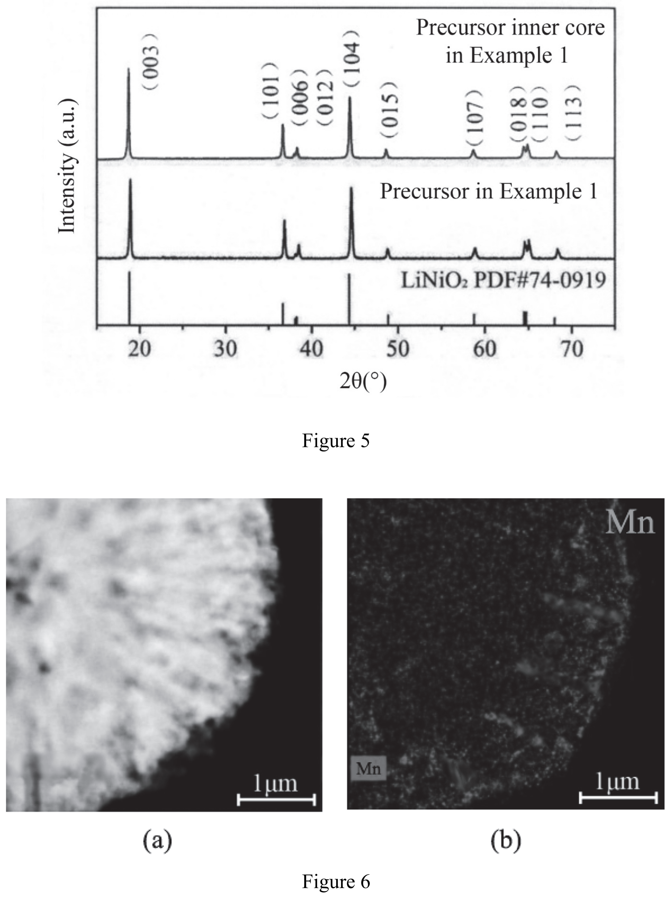

The XRD patterns of the precursor inner core and precursor material prepared in Example 1 were shown in Figure 5, from which it may be seen that: it is consistent with a standard card, that is, there is no impurity phase on the surface, and there are obvious splits in the (006) peak, (012) peak, (018) peak and (110) peak of all samples, indicating that the surface of the samples has a good layered structure.

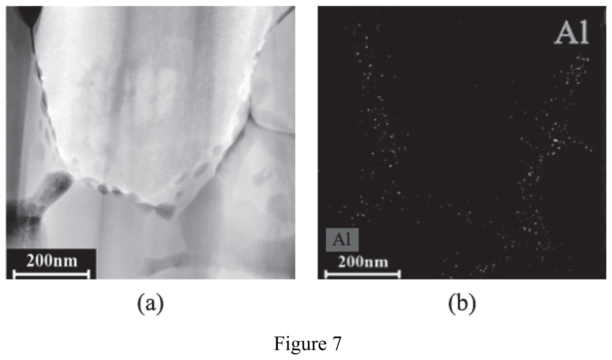

The TEM and EDS images of the cathode materials prepared in Example 1 and Example 4 were shown in Figure 6 and Figure 7, from which it may be seen that: the enrichment of Mn element or Al element appears at the grain boundaries of the primary particles, indicating that the reinforcement agent is successfully distributed near the grain boundaries for reinforcing the primary particles.

The above examples are only the preferred Examples of the present disclosure, and are not intended to limit the present disclosure. For those skilled in the art, various modifications and changes may be made to the present disclosure. Any modifications, equivalent substitutions, and improvements, etc., made within the spirit and principles of the present disclosure should be included within the scope of protection of the present disclosure.

Industrial Applicability

In the present disclosure, by constructing a calculation formula for anti-cracking strength, the ability of a polycrystalline cathode material to resist the generation of internal cracks during cycle is evaluated. The influence of the unit cells and grain boundaries is comprehensively considered to ensure that the anti-cracking strength satisfies a specific value range. The cathode material of which the anti-cracking strength satisfies a specific value range has high-strength crystals and grain boundaries, which may improve the structural stability of the material and effectively inhibit the diffusion of the internal cracks to the interface, thereby improving the cycle stability and lifetime of the material. The testing instruments for the parameters in the expression of anti-cracking strength are all commonly used testing instruments, which are easy to operate and suitable for industrial application.

**Claims**

1. A cathode material for lithium ion batteries, having an anti-cracking strength of 4 MPa to 15 MPa;

$$Anti-cracking\ strength = \frac{Average\ crushing\ strength}{rate\ of\ change\ of\ unit\ cell\ parameter} = \frac{\overline{St}/1000}{\Delta\left(\frac{c}{a}\right)_{max} \times \Delta\left(\frac{c}{a}\right)_{t}};$$

where,

wherein St represents a crushing strength obtained through an indentation test in MPa; $\overline{St}$ represents an average crushing strength in MPa, $\overline{St} = \left(\sum_{i=1}^{n} St_i\right)/n$, n is a sample size, and $n \geq 10$;

$\Delta\left(\frac{c}{a}\right)_{max}$ represents a maximum variation value of shear strain during a first charging process;

$$\Delta\left(\frac{c}{a}\right)_{max} = \left(\frac{c}{a}\right)_{max} - \left(\frac{c}{a}\right)_{min};$$

where

$\Delta\left(\frac{c}{a}\right)_{t}$ represents a variation value of shear strain after 10 charge-discharge cycles, t=10;

where $\Delta\left(\frac{c}{a}\right)_{t} = \left(\frac{c}{a}\right)_{t} - \left(\frac{c}{a}\right)_{0}$; $\Delta\left(\frac{c}{a}\right)_{t}$ represents a shear strain measured at a static state after 10 charge-discharge cycles, and $\left(\frac{c}{a}\right)_{0}$ represents a shear strain measured at a static state before the first charge; and
a and c each represents a unit cell parameter.

2. The cathode material according to claim 1, wherein the cathode material has an anti-cracking strength of 6 MPa to 15 MPa;

$$St = 2.8 \times P/(\pi d^2);$$

wherein P represents a maximum pressure value before a point of sudden pressure drop in an indentation test in mN;
d represents a particle diameter of the cathode material in $\mu$m;
$\Delta\left(\frac{c}{a}\right)_{max}$ ranges from 0.2 to 0.3, $\Delta\left(\frac{c}{a}\right)_{t}$ ranges from 0.01 to 0.20, and St ranges from 90 MPa to 140 MPa; and
c and a are each obtained by XRD testing via an X-ray diffractometer.

3. The cathode material according to claim 1 or 2, wherein the cathode material has a general formula of $Li_xNi_aCo_bM_cM'_{1-a-b-c}A_yO_{2-y}$; wherein

M is at least one selected from the group consisting of Al and Mn;
M' is at least one selected from the group consisting of Zr, Sr, Mo, Ba, W, B, Ti, Mg, Li, Si, Ca, Cu, La, Ce, Bi, In, Al, Nb and Y;
A is at least one selected from the group consisting of P and F; and

0.95≤x<1.1, a>0, b>0, c>0, 0.95≤(a+b+c)≤1 and 0≤y≤0.01.

4. A method for preparing the cathode material for the lithium ion batteries according to any one of claims 1 to 3, comprising:

preparing a cathode material that satisfies anti-cracking strength requirements.

5. The method according to claim 4, comprising:

preparing a precursor inner core with a nickel salt, a cobalt salt and an M salt by a coprecipitation reaction;
mixing the precursor inner core with a reinforcement solution to allow a reaction, and then calcining to obtain a reinforcement precursor inner core; wherein raw materials in the reinforcement solution are calcined to obtain a reinforcement aid; and the reinforcement aid is at least one selected from the group consisting of $LiAlO_2$, $LiMn_2O_4$ and $LiCoPO_4$;
performing a coprecipitation reaction using the nickel salt, the cobalt salt, the M salt and a first doping element compound, to continuously grow a shell on the reinforcement precursor inner core, so as to obtain a ternary precursor with a core-shell structure; wherein the first doping element compound has at least one doping element selected from the group consisting of Ti, Al, Zr and Mg; and
mixing the ternary precursor with a lithium source and calcining a resulting mixture; or, mixing the ternary precursor, a second doping element compound and a lithium source and calcining a resulting mixture; wherein the second doping element compound has at least one doping element selected from the group consisting of Zr, Sr, Mo, Ba, W, B, Ti, Mg, Li, F, Si, Ca, Cu, La, P, Ce, Bi, In, Nb and Y.

6. The method according to claim 5, wherein the precursor inner core has primary particles radially arranged and has a porosity of 4% to 12%.

7. The method according to claim 5 or 6, wherein a preparation process of the precursor inner core comprises: preparing a base solution in a reactor, and introducing a first mixed metal salt solution, a first precipitant solution, and a first complexing agent solution into the base solution for a coprecipitation reaction, and the preparation process of the precursor inner core satisfies at least one of features $A_1$ to $E_1$:

feature $A_1$: a reaction temperature of the coprecipitation reaction is controlled at 75°C to 95°C;
feature $B_1$: a pH value of the coprecipitation reaction is controlled at 10.5 to 11.5;
feature $C_1$: when a particle size D50 grows to 2 $\mu$m to 17 $\mu$m, the introductions are stopped;
feature $D_1$: the coprecipitation reaction is performed under a protection of an inert atmosphere, and a rotation speed during the reaction is 400 rpm to 800 rpm; and
feature $E_1$: after the coprecipitation reaction is completed, aging is performed, followed by carrying out alkali solution washing, water washing and drying successively.

8. The method according to claim 7, wherein the preparation process of the precursor inner core satisfies at least one of features $F_1$ to $K_1$:

feature $F_1$: the first complexing agent solution is an ammonia solution with a mass fraction of 18% to 22%, wherein during the coprecipitation reaction, an ammonia concentration in the reactor is controlled at 3 g/L to 7 g/L;
feature $G_1$: the first mixed metal salt solution has a total molar concentration of metal ions of 1.8M to 2.2M, and a flow rate of 400 L/h to 500 L/h;
feature $H_1$: the first mixed metal salt solution has a molar ratio of nickel, cobalt and M of 35-98: 1-35: 1-35;
feature $I_1$: the first mixed metal salt solution has a salt of any one of nitrate, chloride salt and sulfate;
feature $J_1$: the first precipitant solution is a sodium hydroxide solution with a mass fraction of 30% to 34%; and
feature $K_1$: the base solution has an ammonia concentration of 4.5 g/L to 5.5 g/L, and a pH value of 11.8 to 12.2.

9. The method according to any one of claims 5 to 8, wherein a preparation process of the reinforcement precursor inner core comprises: subjecting the precursor inner core and the reinforcement solution to mixing and ultrasonicating, reacting a resulting mixture for 10 min to 60 min at a temperature of 100°C to 150°C and a pressure of 10 MPa to 20 MPa, followed by performing a solid-liquid separation to obtain a solid material, and calcining the solid material.

10. The method according to claim 9, wherein the preparation process of the reinforcement precursor inner core satisfies at least one of features $A_2$ to $F_2$:

feature $A_2$: the reinforcement solution further contains a thickener, and a viscosity of the reinforcement solution is adjusted to 5 mPa·s to 8 mPa·s by regulating a dosage of the thickener;

feature $B_2$: when feature A2 is satisfied, the thickener is at least one selected from the group consisting of carbomer, xanthan gum, gelatin and starch;

feature $C_2$: a dosage of the reinforcement solution in 1 g the precursor inner core is 90 mL to 110 mL;

feature $D_2$: the ultrasonicating is performed for 10 min to 60 min;

feature $E_2$: the calcining is performed at 600°C to 700°C for 3 h to 8 h; and

feature $F_2$: the solid material is first dried at a condition of 80°C to 120°C for 5 h to 10 h and then calcined.

11. The method according to any one of claims 5 to 10, wherein a preparation process of the ternary precursor having a core-shell structure comprises: adding the reinforcement precursor inner core to a base solution in a reactor, and introducing a second mixed metal salt solution, a second precipitant solution and a second complexing agent solution to the reactor for a coprecipitation reaction;

wherein the second mixed metal salt solution contains a nickel salt, a cobalt salt, an M salt and a first doping element compound, and by regulating an addition rate of the second mixed metal salt solution, an addition rate of the nickel, cobalt and M elements during the coprecipitation reaction is controlled to be lower than an addition rate when preparing the precursor inner core.

12. The method according to claim 11, wherein the preparation process of the ternary precursor having a core-shell structure satisfies at least one of features $A_3$ to $I_3$:

feature $A_3$: the second mixed metal salt solution has a total molar concentration of nickel, cobalt, and M elements of 1.8M to 2.2M, a flow rate of the second mixed metal salt solution is 100 L/h-200 L/h, and a pH value is regulated to be 2 to 5;

feature $B_3$: based on a total molar amount of the nickel, cobalt and M elements, a ratio of a total molar amount of the metal in the reinforcement precursor inner core to a total molar amount of the metal in the second mixed metal salt solution is 4-12: 1;

feature $C_3$: the second mixed metal salt solution has a molar ratio of nickel, cobalt and M elements of 30-60: 20-35: 20-35;

feature $D_3$: the coprecipitation reaction is performed at a reaction temperature of 75°C to 95°C, and a reaction pH value of 10.8 to 11.2;

feature $E_3$: the second complexing agent solution is an ammonia solution with a mass fraction of 18% to 22%, wherein during the coprecipitation reaction, an ammonia concentration in the reactor is controlled at 3 g/L to 7 g/L;

feature $F_3$: the first doping element compound is at least one selected from the group consisting of titanium disulfate, sodium metaaluminate, zirconium nitrate, zirconium acetate, zirconium sulfate, magnesium sulfate and magnesium nitrate;

feature $G_3$: the base solution in the reactor is water, and the second precipitant solution is a sodium hydroxide solution with a mass fraction of 30% to 40%;

feature $H_3$: the coprecipitation reaction is performed under a protection of an inert atmosphere, and a rotation speed during the reaction is 300 rpm to 500 rpm; and

feature $I_3$: after introducing the second mixed metal salt solution, the reaction is continued for 0.5 h to 2.0 h, and then a solid-liquid separation is performed, and an obtained solid material is washed with water and dried.

13. The method according to any one of claims 5 to 12, wherein the process of mixing the ternary precursor, the second doping element compound and the lithium source and calcining a resulting mixture satisfies at least one of features $A_4$ to $F_4$:

feature $A_4$: a molar ratio of a total amount of nickel, cobalt, and M elements in the ternary precursor to a lithium content in the lithium source is 1: 1.05-1.1;

feature $B_4$: the lithium source is lithium hydroxide;

feature $C_4$: the second doping element compound is at least one selected from the group consisting of oxides, fluorides, carbonates, hydroxides, nitrides, borides, and nitrates;

feature $D_4$: the calcining comprises a first calcination performed at 400°C to 500°C for 2 h to 6 h, and a second calcination performed at 750°C to 850°C for 10 h to 15 h;

feature $E_4$: the calcining is performed in an oxygen-containing atmosphere; and

feature $F_4$: the ternary precursor, the second doping element compound, and the lithium source are first mixed and ground, and then calcined.

14. A cathode sheet, comprising the cathode material according to any one of claims 1 to 3 or the cathode material prepared by the method according to any one of claims 4 to 13.

15. A lithium ion battery, comprising the cathode sheet according to claim 14.

Figure 1

Figure 2

Figure 3

Figure 4

Figure 5

Figure 6

(a)　　　　　(b)

Figure 7

## INTERNATIONAL SEARCH REPORT

| International application No. |
|---|
| **PCT/CN2024/132096** |

**A.    CLASSIFICATION OF SUBJECT MATTER**

H01M4/525(2010.01)i;  H01M10/052(2010.01)i;  H01M4/131(2010.01)i;  H01M4/505(2010.01)i;  C01G53/00(2025.01)i

According to International Patent Classification (IPC) or to both national classification and IPC

**B.    FIELDS SEARCHED**

Minimum documentation searched (classification system followed by classification symbols)

IPC：H01M4/-，H01M10/-，C01G53/-

Documentation searched other than minimum documentation to the extent that such documents are included in the fields searched

Electronic data base consulted during the international search (name of data base and, where practicable, search terms used)

CNTXT, ENTXTC, CNKI, ISI_WEB OF SCIENCE: 正极, 抗裂, 裂纹, 裂痕, 裂, 核, 壳, 加固, anode, crack, core, shell, reinforc+

**C.    DOCUMENTS CONSIDERED TO BE RELEVANT**

| Category* | Citation of document, with indication, where appropriate, of the relevant passages | Relevant to claim No. |
|---|---|---|
| PX | CN 118486821 A (GUANGDONG BRUNP RECYCLING TECHNOLOGY CO., LTD. et al.) 13 August 2024 (2024-08-13)<br>claims 1-10 | 1-15 |
| A | CN 114620774 A (CENTRAL SOUTH UNIVERSITY) 14 June 2022 (2022-06-14)<br>description, embodiment 1 | 1-15 |
| A | CN 114551866 A (ZHEJIANG POWER NEW ENERGY CO., LTD.) 27 May 2022 (2022-05-27)<br>entire description | 1-15 |
| A | CN 118173756 A (TIANJIN B&M SCIENCE AND TECHNOLOGY CO., LTD.) 11 June 2024 (2024-06-11)<br>entire description | 1-15 |
| A | KR 20180077090 A (LG CHEMICAL LTD.) 06 July 2018 (2018-07-06)<br>entire description | 1-15 |
| A | CN 117658239 A (JINGMEN GEM CO., LTD. et al.) 08 March 2024 (2024-03-08)<br>entire description | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 March 2025** | **24 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/132096** |

| Patent document cited in search report | | | Publication date (day/month/year) | Patent family member(s) | | | Publication date (day/month/year) |
|---|---|---|---|---|---|---|---|
| CN | 118486821 | A | 13 August 2024 | None | | | |
| CN | 114620774 | A | 14 June 2022 | None | | | |
| CN | 114551866 | A | 27 May 2022 | None | | | |
| CN | 118173756 | A | 11 June 2024 | None | | | |
| KR | 20180077090 | A | 06 July 2018 | KR | 102534607 | B1 | 22 May 2023 |
| CN | 117658239 | A | 08 March 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024109102998